# EUROPEAN PATENT APPLICATION

(11) **EP 4 318 878 A1**
(43) Date of publication of application: **07.02.2024**
(21) Application number: 22895817.9
(22) Date of filing: 15.09.2022
(51) Int. Cl.: H02J 50/80, H02J 50/10, H02J 50/40, H01M 10/42, H04B 5/00

(54) **BATTERY MANAGEMENT APPARATUS AND COMMUNICATION METHOD THEREFOR IN BATTERY RACK SYSTEM**

(30) Priority: 18.11.2021 KR 20210159464
(71) Applicant: LG ENERGY SOLUTION, LTD., Seoul 07335 (KR)
(72) Inventor: CHO, Sung Hyun, Daejeon 34122 (KR)
(74) Representative: Plasseraud IP
(86) International application number: PCT/KR2022/013775
(87) International publication number: WO 2023/090608

(57) **Abstract**

A battery management apparatus and a communication method thereof in a battery rack system according to an embodiments of the present invention may wake up in response to power supplied from a battery management apparatus of the battery rack through the first electromagnetic induction coil, receive information about an identifier of the first battery pack from the battery management apparatus of the battery rack through the wireless communication module, allocate an identifier to the first battery pack based on the information about the identifier of the first battery pack, and supply power to a second battery pack located near the first battery pack through the second electromagnetic induction coil, thereby providing a battery management apparatus and a communication method without a communication cable.

## Description

### [Technical Field]

This application claims priority to and the benefit of Korean Patent Application No.10-2021-0159464 filed in the Korean Intellectual Property Office on November 18, 2021, the entire contents of which are incorporated herein by reference.

The present invention relates to a battery management apparatus in a battery rack system and a communication method thereof, and more particularly, to a battery management apparatus for performing wireless communication in a battery rack system including a plurality of battery packs and a communication method thereof.

### [Background Art]

An energy storage system is provided with a battery rack system including at least one battery pack and a battery rack.

In the battery rack system, the battery packs are managed by communicating with one another using battery management systems (BMS) which are individually accommodated in the battery rack and the at least one battery pack.

More specifically, in the related art, communication is performed by connecting a battery management apparatus of the battery rack and at least one battery management apparatus of the at least one battery pack through a communication cable.

However, as the battery management apparatus is applied to a battery pack recently, there is a demand for technology development for communication connection between battery management apparatuses.

### [Detailed Description of the Invention]

### [Technical Problem]

In order to solve the problem, an object of the present invention is to provide an apparatus for managing a battery system.

In order to solve the problem, another object of the present invention is to provide a battery control method.

### [Technical Solution]

In order to achieve the objective of the present disclosure, a battery management apparatus of a first battery pack, among a plurality of battery packs included in a battery rack, may comprise a wireless communication module, a first electromagnetic induction coil, a second electromagnetic induction coil, and a controller configured to wake up in response to power supplied from a battery management apparatus of the battery rack through the first electromagnetic induction coil, to receive information about an identifier of the first battery pack from the battery management apparatus of the battery rack through the wireless communication module, to allocate an identifier to the first battery pack based on the information about the identifier of the first battery pack, and to supply power to a second battery pack located near the first battery pack through the second electromagnetic induction coil.

The controller may control the wireless communication module to transmit information on an identifier of the second battery pack to the second battery pack when the second battery pack wakes up according to the power supplied.

Furthermore, the second battery pack may be a battery pack positioned closest to the first battery pack among the plurality of battery packs.

The identifier of the second battery pack may be assigned a number next to the identifier of the first battery pack.

In response to completion of allocating the identifier to the first battery pack, the controller may transmit information on the identifier allocated to the first battery pack to the battery rack through the wireless communication module.

According to another embodiment of the present disclosure, a battery management apparatus of a battery rack including a plurality of battery packs may comprise an electromagnetic induction coil, a wireless communication module, and a controller configured to apply power to a first battery pack among the plurality of battery packs through the electromagnetic induction coil to wake up the first battery pack and to transmit information about an identifier of the first battery pack through the wireless communication module to the woken up first battery pack.

The first battery pack may allocate an identifier to the first battery pack based on the information about the identifier of the first battery pack, and supply power to a second battery pack through an electromagnetic induction coil of the first battery pack.

The first battery pack may control the wireless communication module to transmit information on an identifier of the second battery pack to the second battery pack when the second battery pack wakes up according to the power supplied.

The second battery pack may allocate an identifier to the second battery pack based on the information about the identifier of the second battery pack, and supply power to a third battery pack through an electromagnetic induction coil of the second battery pack.

The controller may receive information about a plurality of identifiers individually allocated to the plurality of battery packs, from the plurality of battery packs.

According to another embodiment of the present disclosure, a wireless communication method of a battery management apparatus in a first battery pack among a plurality of battery packs included in a battery rack, the method may comprise waking up in response to power supplied from a battery management apparatus of the battery rack through a first electromagnetic induction coil and receiving information about an identifier of the first battery pack from the battery management apparatus of the battery rack; allocating an identifier to the first battery pack based on the information about the identifier of the first battery pack; and supplying power to a second battery pack located near the first battery pack through a second electromagnetic induction coil.

The wireless communication method may further comprise transmitting information on an identifier of the second battery pack to the second battery pack in the instance that the second battery pack wakes up according to the power supplied.

The second battery pack may be a battery pack positioned closest to the first battery pack among the plurality of battery packs.

The identifier of the second battery pack may be assigned a number next to the identifier of the first battery pack.

The wireless communication method may further comprise transmitting information on the identifier allocated to the first battery pack to the battery rack.

### [Advantageous Effects]

According to embodiments of the present disclosure, a battery management apparatus and a communication method thereof in a battery rack system wake up in response to power supplied from a battery management apparatus of the battery rack through the first electromagnetic induction coil, receive information about an identifier of the first battery pack from the battery management apparatus of the battery rack through the wireless communication module, allocate an identifier to the first battery pack based on the information about the identifier of the first battery pack, and supply power to a second battery pack located near the first battery pack through the second electromagnetic induction coil, thereby providing a battery management apparatus and a communication method thereof in a battery rack system with high-efficiency and low-reliability, which is capable of performing wireless communication among a battery rack and at least one battery packs in a battery rack system, provided wirelessly without a communication cable.

In addition, in a battery rack system according to embodiments of the present invention, it is possible to allocate identifiers to a plurality of battery packs without any cable.

### [Brief Description of the Drawings]

FIG. 1 is a conceptual diagram of a typical battery rack system.
FIG. 2 is a conceptual diagram of a battery rack system according to embodiments of the present invention.
FIG. 3 is a block diagram of a battery management apparatus according to embodiments of the present invention.
FIG. 4 is a flowchart illustrating a wireless communication method of a battery management apparatus in a battery rack system according to embodiments of the present invention.

100: memory 200: processor
300: transceiver 400: input interface
500: output interface 600: storage device
700: bus
P: battery management apparatus of battery pack
P1: battery management apparatus of first battery pack
P2: battery management apparatus of second battery pack
R: battery management apparatus of battery rack
L: communication cable
C: electromagnetic induction coil

### [Best Mode]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

Terms used in the present application are used only to describe specific embodiments, and are not intended to limit the present invention. A singular form includes a plural form if there is no clearly opposite meaning in the context. In the present application, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

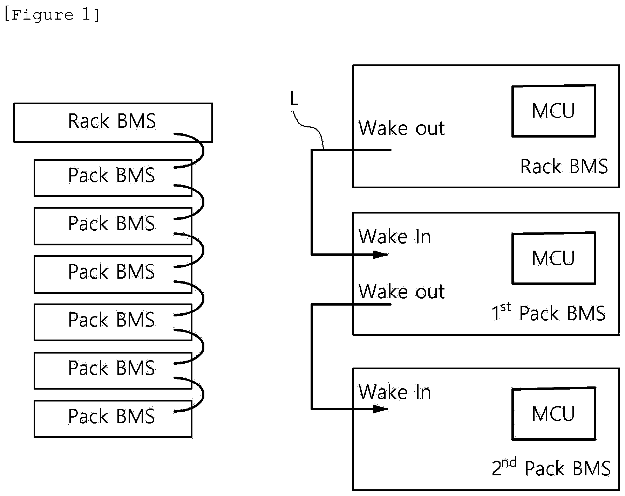

FIG. 1 is a conceptual diagram of a typical battery rack system.

Referring to FIG. 1, a typical battery rack system includes at least one battery pack and a battery rack including the same, and each of the battery rack and the at least one battery pack includes a battery management apparatus.

The battery rack and the at least one battery pack may typically communicate through a communication cable L.

For example, in more detail, the battery rack and the at least one battery pack may transmit and receive a wake signal and identifier information among them adjacent to each other using a communication cable L.

However, the typical battery rack system has a limitation of supporting only wired communication using a communication cable. Accordingly, in the present invention, a battery rack system supporting wireless communication will be described in detail.

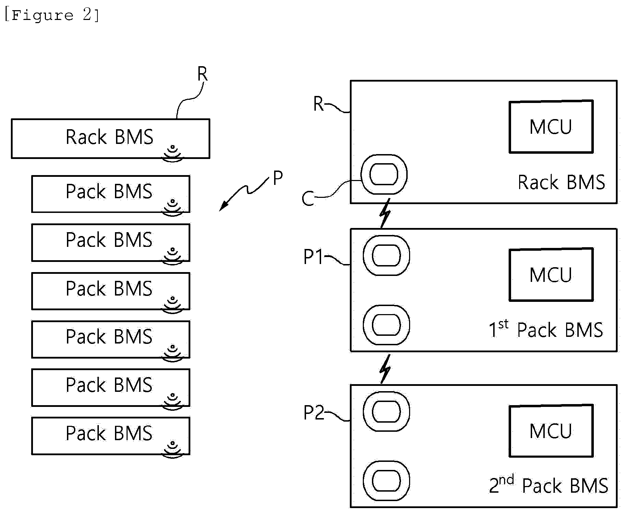

FIG. 2 is a conceptual diagram of a battery rack system according to embodiments of the present invention.

Referring to FIG. 2, a battery rack system may include at least one battery pack.

Each of the at least one battery pack may include a pack battery management apparatus (Pack Battery Management System; Pack BMS), and the battery rack may include a rack battery management apparatus (Rack BMS) for controlling the pack battery management apparatus (Pack BMS) of the at least one battery pack.

In more detail, a battery management apparatus may include a wireless communication module, an electromagnetic induction coil, and a controller.

The wireless communication module is for providing a wireless communication function to the battery management system, and may include, for example, at least one of a Wi-Fi module, a Bluetooth module, and a ZigBee module. According to an embodiment, information on a pack identifier may be transmitted and received between battery management apparatuses through a wireless communication module.

The electromagnetic induction coil may include a first electromagnetic induction coil receiving power and a second electromagnetic induction coil supplying power. Depending on the embodiment, the battery management apparatus (Rack BMS) of the battery rack may be configured without a first electromagnetic induction coil for receiving power.

The controller may control the operations of the wireless communication module and the electromagnetic induction coil.

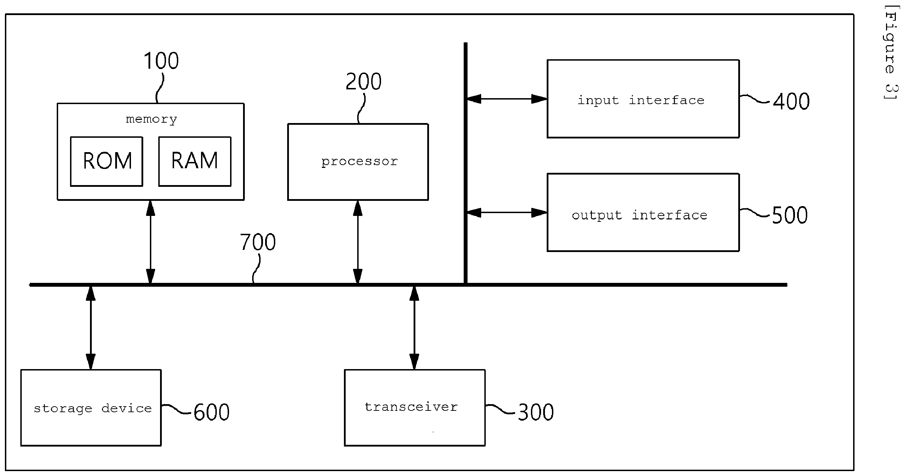

FIG. 3 is a block diagram of a battery management apparatus according to embodiments of the present invention.

Referring to FIG. 3, the battery management apparatus may include a memory 100, a processor 200, a transceiver 300, an input interface 400, an output interface 500, and a storage device 600. Here, the processor 200 of FIG. 3 may be a controller (e.g., MCU; microcontroller unit of FIG. 2) of the present invention.

According to an embodiment, each of the components 100, 200, 300, 400, 500, and 600 included in the battery management apparatus may be connected by a bus 700 to communicate with one another.

Among the components 100, 200, 300, 400, 500, and 600 of the battery management apparatus, the memory 100 and the storage device 600 may include at least one of a volatile storage medium and a non-volatile storage medium. For example, the memory 100 and the storage device 600 may include at least one of a read only memory (ROM) and a random access memory (RAM).

Among them, the memory 100 may include at least one command/instruction executed by the processor 200 to control operations of the wireless communication module.

According to embodiments of the present invention, the at least one instruction may include an instruction to wake up in response to power supplied from a battery management apparatus of the battery rack through the first electromagnetic induction coil, an instruction to receive information about an identifier of the first battery pack from the battery management apparatus of the battery rack through the wireless communication module, an instruction to allocate an identifier to the first battery pack based on the information about the identifier of the first battery pack, and an instruction to supply power to a second battery pack located near the first battery pack through the second electromagnetic induction coil.

The processor 200 may mean a central processing unit (CPU), a graphics processing unit (GPU), or a dedicated processor on which methods according to embodiments of the present invention are performed.

As described above, the processor 200 may execute at least one program command stored in the memory 100 .

In the above, a battery rack system including a battery management apparatus has been described according to embodiments of the present invention. Hereinafter, a wireless communication method in a battery rack system including a battery management apparatus will be described in more detail.

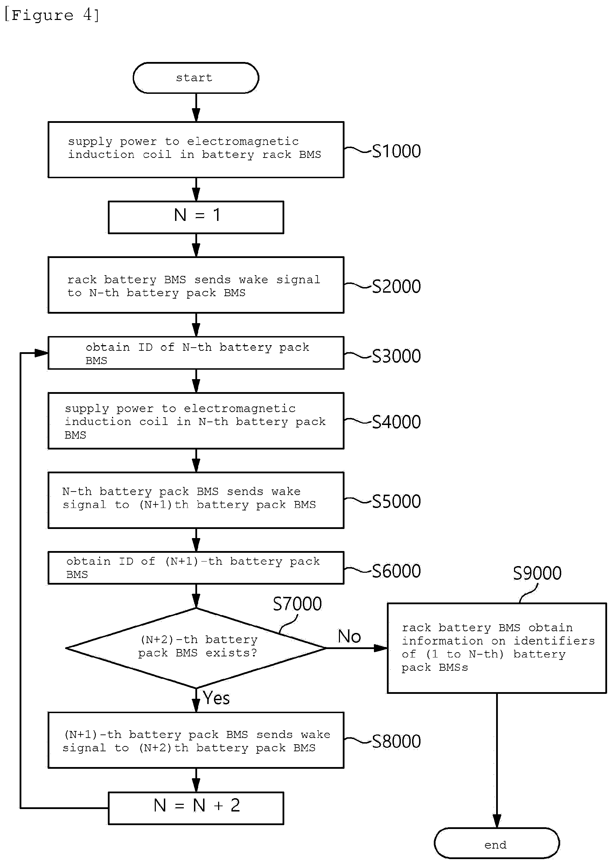

FIG. 4 is a flowchart illustrating a wireless communication method of a battery management apparatus in a battery rack system according to embodiments of the present invention.

Referring to FIG. 4, the battery management apparatus R in the battery rack may supply power to the electromagnetic induction coil (S1000). Accordingly, the battery management apparatus R in the battery rack may supply power to a first electromagnetic induction coil of the first battery pack located in a short distance through electromagnetic induction by the induction coil. Here, the power may be called a wake signal which wakes up the battery management apparatus of the first battery pack.

Thereafter, a battery management apparatus P1 in the first battery pack may wake up when power is supplied through the first electromagnetic induction coil (S2000), and receive information on the identifier from the battery management apparatus R in the battery rack through a wireless communication module(S3000). Accordingly, the battery management apparatus P1 of the first battery pack may allocate an identifier to the first battery pack based on the identifier information. Here, the battery management apparatus R of the battery rack may be positioned closest to the battery management apparatus P1 of the first battery pack.

Then, the battery management apparatus P1 of the first battery pack may apply power to the second electromagnetic induction coil (S4000). Accordingly, the battery management apparatus P1 of the first battery pack may supply power to the battery management apparatus P2 of the second battery pack located in a short distance through electromagnetic induction by the second electromagnetic induction coil of first battery pack. In other words, the battery management apparatus P1 of the first battery pack may transmit a wake signal to the battery management apparatus P2 of the second battery pack (S5000).

Thereafter, the battery management apparatus P2 of the second battery pack, that is activated (woken up) by the power supply, may receive information about an identifier from the battery management apparatus P1 of the first battery pack through a wireless communication module (S6000). Accordingly, the battery management apparatus P2 of the second battery pack may allocate an identifier to the second battery pack based on the identifier information.

Here, the battery management apparatus P1 of the first battery pack may be a device that is positioned closest to the battery management apparatus P2 of the second battery pack and is capable of communication. In other words, the battery management apparatus P2 of the second battery pack may receive information about the identifier of the second battery pack from the battery management apparatus P1 of the first battery pack that is capable of communication and located in the closest location. Here, the identifier of the second battery pack may be sequentially assigned to a number following the identifier assigned to the battery management apparatus P1 of the first battery pack that is capable of communication and is located closest to the second battery pack.

Thereafter, the battery management apparatus P2 of the second battery pack may check whether there is a battery management apparatus of the third battery pack in a close range capable of communication using electromagnetic induction by the second electromagnetic induction coil (S7000).

According to an embodiment, in the instance that there exists a battery management apparatus for the third battery pack, the battery management apparatus P2 for the second battery pack may transmit a wake signal to the battery management apparatus of the third battery pack through a second electromagnetic induction coil (S8000).

Thereafter, the battery management apparatus of the third battery pack may repeatedly perform steps S3000 to S8000 until there is no battery management apparatus of another battery pack in the vicinity.

Alternatively, when the battery management apparatus R of the battery rack receives identifier information corresponding to the pre-stored number of battery packs, the battery management apparatus R may determine that identifiers are allocated to each of all battery packs included in the battery rack and terminate the identifier allocation process. For example, when 17 battery packs are included in a battery rack, the battery management apparatus R may terminate the process for allocating identifiers when information on 17 identifiers is received.

In addition, the battery management apparatus R of the battery rack may obtain configuration information of the battery rack system based on the information about the identifiers, each received from the battery management apparatuses P of the battery packs (S9000).

A battery management apparatus and a communication method thereof in a battery rack system according to embodiments of the present invention have been described above.

A battery management apparatus and a communication method thereof in a battery rack system according to an embodiments of the present invention wake up in response to power supplied from a battery management apparatus of the battery rack through the first electromagnetic induction coil, receive information about an identifier of the first battery pack from the battery management apparatus of the battery rack through the wireless communication module, allocate an identifier to the first battery pack based on the information about the identifier of the first battery pack, and supply power to a second battery pack located near the first battery pack through the second electromagnetic induction coil, thereby providing a battery management apparatus and a communication method thereof in a battery rack system with high-efficiency and low-reliability, which is capable of performing wireless communication among a battery rack and at least one battery packs in a battery rack system, provided wirelessly without a communication cable.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include a hardware device, such as a ROM, a RAM, and a flash memory, specially configured to store and execute program instructions. The program instructions may include not only machine language codes such as those generated by a compiler, but also high-level language codes that can be executed by a computer by using an interpreter or the like.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery management apparatus of a first battery pack among a plurality of battery packs included in a battery rack, the apparatus comprising:
a wireless communication module;
a first electromagnetic induction coil;
a second electromagnetic induction coil; and
a controller configured to wake up in response to power supplied from a battery management apparatus of the battery rack through the first electromagnetic induction coil, to receive information about an identifier of the first battery pack from the battery management apparatus of the battery rack through the wireless communication module, to allocate an identifier to the first battery pack based on the information about the identifier of the first battery pack, and to supply power to a second battery pack located near the first battery pack through the second electromagnetic induction coil.

2. The apparatus of claim 1, wherein the controller controls the wireless communication module to transmit information on an identifier of the second battery pack to the second battery pack when the second battery pack wakes up according to the power supplied.

3. The apparatus of claim 1, wherein the second battery pack is a battery pack positioned closest to the first battery pack among the plurality of battery packs.

4. The apparatus of claim 1, wherein the identifier of the second battery pack is assigned a number next to the identifier of the first battery pack.

5. The apparatus of claim 1, wherein, in response to completion of allocating the identifier to the first battery pack, the controller transmits information on the identifier allocated to the first battery pack to the battery rack through the wireless communication module.

6. A battery management apparatus of a battery rack including a plurality of battery packs, the apparatus comprising:
an electromagnetic induction coil;
a wireless communication module; and
a controller configured to apply power to a first battery pack through the electromagnetic induction coil to wake up the first battery pack and to transmit information about an identifier of the first battery pack through the wireless communication module to the woken up first battery pack.

7. The apparatus of claim 6, wherein the first battery pack allocates an identifier to the first battery pack based on the information about the identifier of the first battery pack, and supplies power to a second battery pack through an electromagnetic induction coil of the first battery pack.

8. The apparatus of claim 7, wherein the first battery pack controls the wireless communication module to transmit information on an identifier of the second battery pack to the second battery pack when the second battery pack wakes up according to the power supplied.

9. The apparatus of claim 8, wherein the second battery pack allocates an identifier to the second battery pack based on the information about the identifier of the second battery pack, and supplies power to a third battery pack through an electromagnetic induction coil of the second battery pack.

10. The apparatus of claim 6, wherein the controller receives information about a plurality of identifiers individually allocated to the plurality of battery packs, from the plurality of battery packs.

11. A wireless communication method of a battery management apparatus in a first battery pack among a plurality of battery packs included in a battery rack, the method comprising:
waking up in response to power supplied from a battery management apparatus of the battery rack through a first electromagnetic induction coil and receiving information about an identifier of the first battery pack from the battery management apparatus of the battery rack;
allocating an identifier to the first battery pack based on the information about the identifier of the first battery pack; and
supplying power to a second battery pack located near the first battery pack through a second electromagnetic induction coil.

12. The method of claim 11, further comprising transmitting information on an identifier of the second battery pack to the second battery pack in the instance that the second battery pack wakes up according to the power supplied.

13. The method of claim 11, wherein the second battery pack is a battery pack positioned closest to the first battery pack among the plurality of battery packs.

14. The method of claim 11, wherein the identifier of the second battery pack is assigned a number next to the identifier of the first battery pack.

15. The method of claim 11, further comprising transmitting information on the identifier allocated to the first battery pack to the battery rack.
